# EUROPÄISCHE PATENTSCHRIFT

(11) **EP 1 182 407 B1**
(45) Veröffentlichungstag und Bekanntmachung des Hinweises auf die Patenterteilung: **01.03.2006**
(21) Anmeldenummer: 01119906.4
(22) Anmeldetag: 17.08.2001
(51) Int. Cl.: F24F 11/00

(54) **Vorrichtung zum Steuern und/oder Überwachen der klimatischen Verhältnisse in einem Gebäude**
Device for controling and/or monitoring the climatic conditions inside a building
Dispositif pour la commande et/ou la surveillance des conditions climatiques dans un bâtiment

(30) Priorität: 19.08.2000 DE 10040650
(43) Veröffentlichungstag der Anmeldung: 27.02.2002
(73) Patentinhaber: Lampe & Martens Gebäudetechnik Gmbh & Co. KG, 49681 Garrel (DE)
(72) Erfinder: Lampe, Stephan, 26197 Grossenkneten (DE); Martens, Lothar, 49681 Garrel (DE)
(74) Vertreter: Jabbusch, Matthias

(56) Entgegenhaltungen:
- EP-A- 0 704 659
- EP-A- 0 783 091
- EP-A- 0 793 062
- WO-A-97/46834
- DE-A- 3 124 966
- DE-A- 4 331 062
- DE-A- 19 615 469
- DE-A- 19 719 232
- US-A- 5 743 101
- US-A- 5 976 010
- P. ISELT: "Die andere Klimatechnik" 1999 , C.F. MÜLLER VERLAG , HEIDELBERG XP002199526 * Seite 150 - Seite 161 *

## Beschreibung

Die Erfindung betrifft eine Vorrichtung zum Steuern und/oder Überwachen der klimatischen Verhältnisse in einem Gebäude, insbesondere in einem öffentlichen Gebäude, vorzugsweise in einem Supermarkt, umfassend Mittel zum Herstellen definierter klimatischer Verhältnisse und umfassend eine Steuerungseinrichtung, mit der die Mittel zum Herstellen definierter klimatischer Verhältnisse verschaltet sind.

Öffentliche Gebäude werden von einer Vielzahl von Personen betreten. Beispielsweise wird ein Einkaufsmarkt von Kunden aufgesucht. Damit diese Kunden in dem Einkaufsmarkt Waren kaufen, ist unter anderem ein angenehmes Innenklima in diesem Einkaufsmarkt erforderlich, so daß sich die Kunden im Einkaufsmarkt wohl fühlen. Dieses angenehme Innenklima zeichnet sich beispielsweise durch eine Abfuhr verbrauchter Luft, sowie durch eine Erwärmung zugeführter Frischluft und gegebenenfalls durch eine Befeuchtung zugeführter Luft und dergleichen Maßnahmen aus.

Um derartige klimatische Verhältnisse insbesondere in einem Einkaufsmarkt herzustellen, sind bereits Vorrichtungen der eingangs genannten Gattung vorgeschlagen worden. Diese Vorrichtungen umfassen Mittel zum Herstellen der klimatischen Verhältnisse, wobei diese Mittel beispielsweise als Lüfter, als Heizungen oder Klimaanlagen ausgebildet sind. Diese Mittel sind mit einer Steuerungsanlage verschaltet. Sie nimmt anhand gemessener Parameter der im Einkaufsmarkt vorhandenen Raumluft eine Einstellung der Mittel zum Herstellen der klimatischen Verhältnisse vor. Dabei ist bereits ein hoher Automatisierungsgrad erreicht worden.

Bei der bekannten Vorrichtung wird eine Steuerungseinrichtung verwendet, die als Zentralsteuerungseinrichtung dient. Mit dieser kann nachteilig nur eine endliche Zahl von Mitteln zum Herstellen klimatischer Verhältnisse angesteuert werden. Diese endliche Zahl ergibt sich aus einer konstruktionsbedingten Beschränkung der zentralen Steuerungseinrichtung. Beispielsweise kann mit einer Steuerungseinrichtung eine Regulierung der klimatischen Verhältnisse in lediglich zwei voneinander getrennten Räumen des Einkaufsmarktes vorgenommen werden. Sind in einem Einkaufsmarkt mehr als zwei Räume vorhanden, so sind diese mit separaten Vorrichtungen der eingangs genannten Gattung auszurüsten, die jeweils eine separate zentrale Steuerungseinrichtung aufweisen. Durch diese dezentrale Klimaregelung innerhalb des Einkaufsmarktes entstehen hohe Kosten. Eine bekannte Vorrichtung ist in der Druckschrift P. Diesel: "Die andere Klimatechnik" 1999 C.F. Müller Verlag, Heidelberg beschrieben worden.

Der Erfindung liegt die Aufgabe zugrunde, eine Vorrichtung der eingangs genannten Gattung aufzuzeigen, mit der auf einfache Weise eine Steuerung bzw. Überwachung der klimatischen Verhältnisse in einem Einkaufsmarkt oder einem anderen öffentlichen Gebäude möglich ist, in dem gegebenenfalls mehrere Räume vorhanden sind.

Diese Aufgabe ist erfindungsgemäß dadurch gelöst, daß eine Steuerungseinrichtung der Vorrichtung mit wenigstens einer weiteren Untersteuerungsanlage verschaltet ist, wobei zumindestens einige der Mittel zum Herstellen definierter klimatischer Verhältnisse mit der Untersteuerungsanlage verschaltet sind.

Bei der erfindungsgemäßen Vorrichtung ist nicht lediglich eine Steuerungseinrichtung vorgesehen, sondern es ist wenigstens eine weitere Untersteuerungsanlage vorgesehen. Es können auch mehrere Untersteuerungsanlagen vorgesehen sein, die jeweils mit der Steuerungseinrichtung verschaltet sind.

Die Endlichkeit der Anschaltmöglichkeiten für Mittel zum Herstellen definierter klimatischer Verhältnisse an der zentralen Steuerungseinrichtung wird durch das Vorsehen der wenigstens einen Untersteuerungsanlage vorteilhaft aufgehoben. Mittel zum Herstellen klimatischer Verhältnisse sind aufgrund des Vorhandenseins der Untersteuerungsanlage nicht mehr zwingend mit der zentralen Steuerungseinrichtung zu verschalten, sondern können statt an dieser mit der Untersteuerungsanlage verschaltet sein. Dadurch wird die zentrale Steuerungseinrichtung entlastet, mit dem Vorteil, daß eine große Zahl von Mitteln zum Herstellen definierter klimatischer Verhältnisse kostengünstig durch eine erfindungsgemäße Vorrichtung ansteuerbar ist.

Zu diesem Zweck sind einige der Mittel zum Herstellen definierter klimatischer Verhältnisse mit der Untersteuerungsanlage verschaltet. Diese Mittel sind vorzugsweise ausschließlich mit dieser Untersteuerungsanlage verschaltet. Die Untersteuerungsanlage ist dabei in der Lage, in gleicher Weise wie die zentrale Steuerungseinrichtung eine Steuerung der mit ihr verschalteten Mittel vorzunehmen.

Die Funktion der erfindungsgemäßen Vorrichtung insgesamt ist nicht beeinträchtigt, vorteilhaft wird aber erreicht, daß einige der Steuerungsfunktionen von der zentralen Steuerungseinrichtung an eine Untersteuerungsanlage bzw. an mehrere Untersteuerungsanlagen delegiert werden. Dadurch ergibt sich der Vorteil, daß eine Endlichkeit der Anschaltung von Mitteln zum Herstellen klimatischer Verhältnisse an der Steuerungseinrichtung nicht auftritt, da eine entsprechende Anzahl von Untersteuerungsanlagen vorgesehen sein kann, an die die Mittel angeschaltet sind. Für mehr als zwei Räume z. B. in einem Einkaufsmarkt sind vorteilhaft nicht mehrere Vorrichtungen vorzusehen. Vielmehr wird eine erforderliche Anzahl von Untersteuerungsanlagen vorgesehen, mit der die klimatischen Verhältnisse in mehreren Räumen regelbar sind. Sämtliche Untersteuerungsanlagen sind dabei mit ein und derselben zentralen Steuerungseinrichtung verschaltet, so daß auf vorteilhafte Weise mit einer zentralen Steuerungseinrichtung sämtliche Untersteuerungsanlagen überwacht werden können. Die gesamten klimatischen Verhältnisse in einem Gebäude sind somit vorteilhaft durch eine Steuerungseinrichtung ein und derselben erfindungsgemäßen Vorrichtung steuerbar bzw. überwachbar. '

In der Untersteuerungsanlage ist vorzugsweise wenigstens ein Speichermodul zur Ablage von Sollwerten der definierten klimatischen Verhältnisse angeordnet. In diesem Speichermodul sind vorzugsweise Werte für eine Soll-Temperatur, eine Soll-Luftfeuchtigkeit, eine Soll-CO₂-Konzentration gespeichert. Mit der Untersteuerungsanlage werden die mit ihr verschalteten Mittel zum Herstellen der klimatischen Verhältnisse in der Weise eingestellt, daß diese im Gebäude klimatische Verhältnisse herstellen, deren Ist-Werte den Sollwerten entsprechen bzw. diesen weitestgehend angenähert sind. Diese Einstellung der Mittel kann beispielsweise manuell erfolgen, nachdem durch eine Bedienungsperson die gegenwärtig herrschenden Raumluft-Parameter festgestellt wurden. Vorzugsweise ist jedoch ein automatischer Betrieb vorgesehen, wobei durch die Verschaltung der Untersteuerungsanlage mit der zentralen Steuerungseinrichtung von dieser der Untersteuerungsanlage Informationen über die gegenwärtig herrschenden Raumluft-Parameter zugeleitet werden können.

Nach einer Weiterbildung der Erfindung sind die Steuerungseinrichtung und die wenigstens eine Untersteuerungsanlage mit einem Bussystem miteinander verschaltet. Ein Bussystem stellt vorteilhaft eine leistungsfähige Verbindung zwischen der Steuerungseinrichtung und der Untersteuerungsanlage zur Verfügung, mit der pro Zeiteinheit eine große Datenmenge übertragen werden kann. Ein Bussystem ist zudem vorteilhaft dazu geeignet, die Steuerungseinrichtung nicht nur mit einer Untersteuerungsanlage, sondern mit mehreren Untersteuerungsanlagen zu verbinden.

Die durch das Bussystem hergestellte Verschaltung von Steuerungseinrichtung und Untersteuerungsanlage dient beispielsweise dazu, mit der Steuerungseinrichtung bestimmte Werte, beispielsweise Sollwerte, an die Untersteuerungsanlage zu übertragen bzw. dort gespeicherte Werte zu ändern. Die Steuerungseinrichtung ist somit weiterhin zur zentralen Überwachung der klimatischen Verhältnisse beispielsweise innerhalb eines Einkaufsmarktes vorgesehen, sie gibt Befehle an die Mittel zum Einstellen dieser Verhältnisse jedoch nicht ausschließlich unmittelbar an die Mittel weiter, sondern zumindestens teilweise zunächst an eine Untersteuerungsanlage, an der wiederum die Mittel angeschaltet sind.

Die Steuerungseinrichtung und die wenigstens eine Untersteuerungsanlage können dabei in ein und derselben Baueinheit angeordnet sein. Es kann beispielsweise vorgesehen sein, daß die Untersteuerungsanlage als reine Softwarelösung innerhalb der Steuerungseinrichtung ausgebildet ist. Vorzugsweise ist die Untersteuerungsanlage jedoch als Hardwarelösung ausgebildet, wobei sie eine separate Baueinheit ausbildet. Die gemeinsame Anordnung von Steuerungseinrichtung und Untersteuerungsanlage kann in einem Gehäuse vorgesehen sein, jedoch kann auch eine separate Untersteuerungsanlage in einem Gehäuse angeordnet sein.

Bei der separaten Anordnung der Untersteuerungsanlage z. B. in einem Gehäuse ist nach einer Weiterbildung der Erfindung vorgesehen, daß die Untersteuerungsanlage einem Mittel zum Herstellen definierter klimatischer Verhältnisse unmittelbar zugeordnet ist. Nach dieser Weiterbildung ist eine kompakte Kombination von Untersteuerungsanlage und Mittel zum Herstellen definierter klimatischer Verhältnisse möglich. Beispielsweise kann vorgesehen sein, daß die Untersteuerungsanlage in einem Gehäuse direkt an einem Mittel, beispielsweise an einem Lüfter, angeordnet ist.

Der besondere Vorteil dieser Ausbildung liegt in der Platzersparnis.

Ein Mittel zum Herstellen definierter klimatischer Verhältnisse kann dabei ein Deckenluftheizgerät, eine Heizung, eine Klimaanlage oder ein dergleichen klimatisches Gerät sein.

Nach einer nächsten Weiterbildung der Erfindung ist vorgesehen, daß die Untersteuerungsanlage wenigstens eine Regelelektronik aufweist, die mit Meßsensoren für Parameter der Raumluft im Inneren des Gebäudes verknüpft ist und die mit Bauteilen der Mittel zum Herstellen definierter klimatischer Verhältnisse verknüpft ist, wobei diese Bauteile zum Einstellen der Funktionen der Mittel vorgesehen sind. In der Untersteuerungsanlage laufen somit zunächst Informationen über die Parameter der Raumluft auf, die von Meßsensoren festgestellt werden. Diese Parameter sind beispielsweise die Temperatur, die Luftfeuchtigkeit, der Kohlendioxidgehalt. Diese Parameter werden in der Regelelektronik verarbeitet und von der Regelelektronik werden in Abhängigkeit von diesen Parametern die Bauteile der Mittel zum Herstellen definierter klimatischer Verhältnisse angesteuert. Die Ansteuerung erfolgt derart, daß mit den Mitteln zum Herstellen definierter klimatischer Verhältnisse eine Beeinflussung der Raumluft dahingehend erfolgt, daß die Ist-Parameter der Raumluft möglichst schnell den Soll-Parametern angeglichen werden. Vorzugsweise ist ein Betrieb der Untersteuerungsanlage auch dann möglich, wenn die zentrale Steuerungseinrichtung beispielsweise aufgrund eines Gerätefehlers ausfällt. Die Betriebssicherheit der Vorrichtung insgesamt ist dadurch vorteilhaft erhöht.

Die Bauteile der Mittel sind beispielsweise Mischer, Stellmotoren, Pumpen, Klappen und Drehzahlsteller oder andere Bauteile, die auf die Funktion der Deckenluftheizgeräte, Heizungen, Klimaanlagen und dergleichen einen den jeweiligen Betriebszustand des Mittels verändernden Einfluß haben.

Eine nächste Weiterbildung der Erfindung sieht vor, daß die Steuerungseinrichtung mit einem Fernabfragemodul versehen ist. Dieses Fernabfragemodul ermöglicht eine Abfrage von Einstellungen der Steuerungseinrichtung aus einer größeren Entfernung auf verschiedenen Kommunikationswegen, z. B. über das Telefon- oder Mobiltelefonnetz oder ein LAN-Netz (lokales Netzwerk).

Die Steuerungseinrichtung kann weiterhin wenigstens einen Energieverbrauchseingang aufweisen.

Energieverbrauchsmeßwerte können der Steuerungseinrichtung dann beispielsweise durch die Anbindung der Steuerungseinrichtung an ein lokales Netzwerk einer Energieoptimierungsvorrichtung für alle Energieverbraucher des Gebäudes zur Verfügung gestellt werden.

Zur Anbindung der Steuerungseinrichtung sieht eine Weiterbildung der Erfindung vor, daß der Steuereinrichtung wenigstens eine Schnittstelle zu einem externen Bussystem zugeordnet ist. Somit ist bei der erfindungsgemäßen Vorrichtung nicht nur ein internes Bussystem zwischen der Steuerungseinrichtung und den Untersteuerungsanlagen vorgesehen, sondern kann die zentrale Steuerungseinrichtung gleichfalls über ein Bussystem in externe Systeme, z. B. Energieverbrauchsoptimierungssysteme, eingebunden werden. Als Bussysteme kommen dabei beispielsweise RS-485-, CAN-, EIB-, LCN/LON- oder BACNET-Bussysteme oder andere Bussysteme zum Einsatz. Diesen Bussystemen können neben der zentralen Steuerungseinrichtung weitere Systeme in dem Gebäude und/oder außerhalb des Gebäudes zugeordnet sein, z. B. Heizungssysteme, Elektrotechniksysteme und vorzugsweise sämtliche in dem Gebäude angeordneten elektrischen Verbraucher. Bei dem Gebäude kann es sich dabei auch um ein Einfamilienhaus handeln.

Eine Fernabfrage von Parametern und Einstellungen der Steuerungseinrichtung und damit mittelbar auch der Untersteuerungsanlagen ist über ein derartiges externes Bussystem möglich. Die Abfrage kann dabei drahtgebunden, beispielsweise über das Internet, erfolgen, es sind jedoch auch drahtlose Abfragen möglich, z. B. über Mobiltelefonstandards WAP und UMTS. Die Abfragen sind dabei bidirektional durchführbar.

Die Steuerungseinrichtung kann schließlich mit wenigstens einem datenverarbeitenden Gerät, wie einem Personalcomputer, verknüpft sein, mit dem die Funktion der Steuerungseinrichtung überwacht wird und Einstellungen, beispielsweise Veränderungen von abgelegten Sollwerten, vorgenommen werden können. Durch den Personalcomputer kann die Schnittstelle zum externen Bussystem bereitgestellt werden, beispielsweise in Form einer Hardware - Platine.

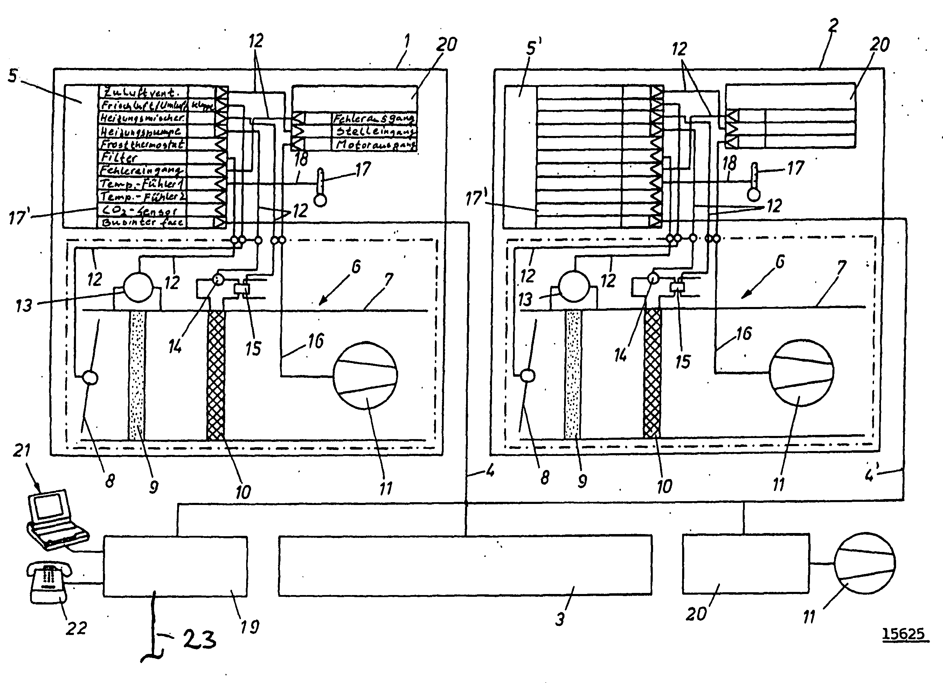

Ein Ausführungsbeispiel der Erfindung, aus dem sich weitere erfinderische Merkmale ergeben, ist in der Zeichnung dargestellt. Die einzige Figur der Zeichnung zeigt eine Systemübersicht einer Vorrichtung zum Steuern und Überwachen der klimatischen Verhältnisse in einem Gebäude.

Die Systemübersicht zeigt, daß mit der Vorrichtung wenigstens zwei voneinander separate Räume 1 und 2 ansteuerbar sind, um in diesen definierte klimatische Verhältnisse herzustellen. Die Vorrichtung weist dazu eine Steuerungseinrichtung 3 auf, die über ein Busleitungen 4, 4' aufweisendes Bussystem mit den Räumen 1, 2 zugeordneten Bauelementen verschaltet ist.

Die Busleitung 4 ist zum Raum 1 geführt und mit einer in diesem Raum 1 angeordneten Untersteuerungsanlage 5 verschaltet. Die Busleitung 4' führt in analoger Weise zu einer weiteren Untersteuerungsanlage 5' im Raum 2.

Mit der Untersteuerungsanlage 5 werden unabhängig von der Steuerungseinrichtung 3 im Raum 1 definierte klimatische Verhältnisse hergestellt. Dies ist in der Figur durch die Verschaltung der Untersteuerungsanlage 5 mit Meßsensoren und mit einem Mittel zum Herstellen klimatischer Verhältnisse schematisch dargestellt.

Bei dem Mittel handelt es sich um ein Deckenluftheizgerät 6, wie es in großen Einkaufsmärkten üblicherweise Verwendung findet. Das Deckenluftheizgerät 6 weist einen Luftführungskanal 7 auf, in dem in Luftführungsrichtung nacheinander mehrere Bauteile des Deckenluftheizgerätes 6 angeordnet sind. Diese Bauteile sind eine Klappe 8, ein Filter 9, ein Heizregister 10 und ein Lüfter 11. Die Klappe 8 ist über eine Steuerungsleitung 12 mit der Untersteuerungsanlage 5 verschaltet. Eine Überwachungseinrichtung 13 des Filters 9 ist über eine Steuerungsleitung 12 gleichfalls mit der Untersteuerungsanlage 5 verschaltet. Mit der Untersteuerungsanlage 5 sind über Steuerungsleitungen 12 auch eine Pumpe 14 sowie ein Mischer 15 des Heizregisters 10 verknüpft.

Der Lüfter 11 ist über eine elektrische Leitung 16 mit einem Drehzahlsteller 20 verschaltet, der seinerseits mit Steuerungsleitungen 12 an die Untersteuerungsanlage 5 angeschlossen ist.

Neben diesen Verschaltungen der Untersteuerungsanlage 5 mit den Bauteilen des Deckenluftheizgerätes 6 ist die Untersteuerungsanlage 5 weiterhin mit Sensoren verschaltet, welche die klimatischen Verhältnisse, insbesondere der Raumluft innerhalb des Raumes 1 überwachen. Von diesen Sensoren ist ein Temperatursensor 17 dargestellt, der über eine Datenleitung 18 mit der Untersteuerungsanlage 5 verschaltet ist. Ein weiterer in der Untersteuerungsanlage 5 angeordneter Sensor ist ein Kohlendioxidsensor 17`. Weitere nicht dargestellte Sensoren zur Überwachung der klimatischen Verhältnisse können mit der Untersteuerungsanlage 5 verschaltet sein. Es ist auch möglich, daß entsprechende Sensoren mit der Steuereinrichtung 3 verschaltet sind. Die von diesen Sensoren gelieferten Daten werden in der Steuerungseinrichtung 3 verarbeitet und über die Busleitung 4 werden entsprechende Befehle an die Untersteuerungsanlage 5 gesandt.

Die Steuerungseinrichtung 3 ist über das Bussystem noch mit einem Interface 19 sowie einem Drehzahlsteller 20 für einen Lüfter 11 für Abluft verschaltet. An das Interface 19 sind ein Datenverarbeitungsgerät, beispielsweise ein Personalcomputer 21, sowie ein Modem 22 beispielsweise zur Fernabfrage angeschlossen. Durch das Interface 19 wird zudem eine Schnittstelle der Steuerungseinrichtung 3 zu einem externen Bussystem 23 ausgebildet.

Die Anordnung eines Deckenluftheizgerätes 6, das mit einer Untersteuerungsanlage 5' verknüpft ist, erfolgt im Raum 2 in entsprechender Weise wie die Anordnung des Deckenluftheizgerätes 6 im Raum 1. Weitere Untersteuerungsanlagen für zusätzliche Räume können mit der Steuerungseinrichtung 3 verschaltet sein.

## Patentansprüche

1. Vorrichtung zum Steuern und/oder Überwachen der klimatischen Verhältnisse in einem Gebäude, insbesondere in einem öffentlichen Gebäude, vorzugsweise in einem Einkaufsmarkt, umfassend Mittel (6) zum Herstellen definierter klimatischer Verhältnisse und umfassend eine Steuerungseinrichtung (3), mit der die Mittel zum Herstellen definierter klimatischer Verhältnisse verschaltet sind,
**dadurch gekennzeichnet,**
**daß** die Steuerungseinrichtung (3) mit wenigstens einer weiteren Untersteuerungsanlage (5, 5') verschaltet ist, wobei zumindestens einige der Mittel (6) zum Herstellen definierter klimatischer Verhältnisse mit der Untersteuerungsanlage (5, 5') verschaltet sind.

2. Vorrichtung nach Anspruch 1, **dadurch gekennzeichnet, daß** zumindestens einige der Mittel zum Herstellen definierter klimatischer Verhältnisse ausschließlich mit der Untersteuerungsanlage (5, 5') verschaltet sind.

3. Vorrichtung nach Anspruch 1 oder 2, **dadurch gekennzeichnet, daß** die Untersteuerungsanlage (5, 5') wenigstens ein Speichermodul zur Ablage von Sollwerten der definierten klimatischen Verhältnisse aufweist.

4. Vorrichtung nach einem der vorhergehenden Ansprüche, **dadurch gekennzeichnet, daß** die Steuerungseinrichtung (3) und die wenigstens eine Untersteuerungsanlage (5, 5') mit einem Bussystem miteinander verschaltet sind.

5. Vorrichtung nach einem der vorhergehenden Ansprüche, **dadurch gekennzeichnet, daß** die Steuerungseinrichtung (3) und die wenigstens eine Untersteuerungsanlage (5, 5') in ein und derselben Baueinheit angeordnet sind.

6. Vorrichtung nach Anspruch 5, **dadurch gekennzeichnet, daß** die Baueinheit als Gehäuse ausgebildet ist.

7. Vorrichtung nach einem der Ansprüche 1 bis 4, **dadurch gekennzeichnet, daß** die wenigstens eine Untersteuerungsanlage (5, 5') einem Mittel zum Herstellen definierter klimatischer Verhältnisse unmittelbar zugeordnet ist.

8. Vorrichtung nach einem der vorhergehenden Ansprüche, **dadurch gekennzeichnet, daß** das Mittel zum Herstellen definierter klimatischer Verhältnisse ein Deckenluftheizgerät (6), eine Heizung oder eine Klimaanlage ist.

9. Vorrichtung nach einem der vorhergehenden Ansprüche, **dadurch gekennzeichnet, daß** die Untersteuerungsanlage (5, 5') wenigstens eine Regelelektronik aufweist, die mit Meßsensoren (17, 17') für Parameter der Raumluft im Inneren des Gebäudes verknüpft ist und die mit Bauteilen der Mittel zum Herstellen definierter klimatischer Verhältnisse verknüpft ist, wobei diese Bauteile zum Einstellen der Funktionen der Mittel vorgesehen sind.

10. Vorrichtung nach Anspruch 9, **dadurch gekennzeichnet, daß** die Bauteile Mischer (15), Stellmotoren (3), Pumpen (14), Klappen (8) und Drehzahlsteller (20) sind.

11. Vorrichtung nach einem der vorhergehenden Ansprüche, **dadurch gekennzeichnet, daß** die Steuerungseinrichtung (3) und/oder die wenigstens eine Untersteuerungsanlage (5, 5') mit einem Fernabfragemodul versehen sind/ist.

12. Vorrichtung nach einem der vorhergehenden Ansprüche, **dadurch gekennzeichnet, daß** die Steuerungseinrichtung (3) wenigstens einen Energieverbrauchseingang aufweist.

13. Vorrichtung nach einem der vorhergehenden Ansprüche, **dadurch gekennzeichnet, daß** der Steuerungseinrichtung (3) wenigstens eine Schnittstelle zu einem externen Bussystem (23) zugeordnet ist.

14. Vorrichtung nach einem der vorhergehenden Ansprüche, **dadurch gekennzeichnet, daß** die Steuerungseinrichtung (3) mit wenigstens einem Personalcomputer (21) verknüpft ist.

15. Vorrichtung nach Anspruch 14, **dadurch gekennzeichnet, daß** der Personalcomputer (21) die Schnittstelle zum externen Bussystem (23) bereitstellt.

## Claims

1. A device for controlling and/or monitoring the climatic conditions in a building, particularly in a public building, preferably in a hypermarket , including means (6) for producing defined climatic conditions and including a control device (3), with which the means for producing defined climatic conditions is connected,
**characterised in that**
the control device (3) is connected to at least one additional subcontroller device (5, 5'), wherein at least some means (6) for producing defined climatic conditions as connected to the subcontroller device (5, 5').

2. The device as cited in claim 1,
**characterised in that**
at least some of the means for producing the defined climatic conditions are connected exclusively to the to the subcontroller device (5, 5').

3. The device as cited in either of claims 1 or 2,
**characterised in that**
the subcontroller device (5, 5') has at least one storage module for storing setpoints for the defined climatic conditions.

4. The device according to any of the preceding claims,
**characterised in that**
the control device (3) and the at least one subcontroller device (5, 5') are connected to each other via a bus system.

5. The device according to any of the preceding claims,
**characterised in that**
the control device (3) and the at least one subcontroller device (5, 5') are arranged in the same physical unit.

6. The device according to claim 5,
**characterised in that**
the physical unit is constructed as a housing.

7. The device as cited in any of claims 1 to 4,
**characterised in that**
the at least one subcontroller device (5, 5') is assigned directly to a means for producing defined climatic conditions.

8. The device as cited in any of the preceding claims,
**characterised in that**
the means for producing defined climatic conditions is a ceiling-mounted air heating mechanism (6), a heating installation or an air conditioning installation.

9. The device as cited in any of the preceding claims,
**characterised in that**
the subcontroller device (5, 5') has at least one regulating electronic system, which is linked to measurement sensors (17, 17') for parameters of the ambient air inside the building and which is linked with subassemblies of the means for producing defined climatic conditions, wherein these subassemblies are provided for adjusting the functions of the means.

10. The device as cited in claim 9,
**characterised in that**
the subassemblies are mixers (15), servomotors (3), pumps (14), valves (8) and speed regulators (20).

11. The device as cited in any of the preceding claims,
**characterised in that**
the control device (3) and/or the at least one subcontroller device (5, 5') are equipped with a remote enquiry module.

12. The device as cited in any of the preceding claims,
**characterised in that**
the control device (3) has at least one energy consumption input.

13. The device as cited in any of the preceding claims,
**characterised in that**
at least one interface with an external bus system (23) is assigned to the control device (3).

14. The device as cited in any of the preceding claims,
**characterised in that**
the control device (3) is linked to at least one personal computer (21).

15. The device as cited in claim 14,
**characterised in that**
the personal computer (21) provides the interface with the external bus system.

## Revendications

1. Dispositif de commande et/ou de surveillance des conditions climatiques dans un bâtiment, notamment dans un bâtiment public, de préférence dans un centre commercial, comprenant des moyens (6) d'établissement de conditions climatiques définies et comprenant un dispositif de commande (3) auquel sont branchés les moyens d'établissement de conditions climatiques définies,
**caractérisé en ce que**
le dispositif de commande (3) est branché à au moins une autre sous-installation de commande (5, 5'), au moins certains des moyens (6) d'établissement de conditions climatiques définies étant branchés à la sous-installation de commande (5, 5').

2. Dispositif selon la revendication 1, **caractérisé en ce qu'**au moins certains des moyens d'établissement de conditions climatiques définies sont branchés exclusivement à la sous-installation de commande (5, 5').

3. Dispositif selon la revendication 1 ou 2, **caractérisé en ce que** la sous-installation de commande (5, 5') présente au moins un module de mémoire pour l'enregistrement de valeurs théoriques des conditions climatiques définies.

4. Dispositif selon une des revendications précédentes, **caractérisé en ce que** le dispositif de commande (3) et l'au moins une sous-installation de commande (5, 5') sont branchés les uns aux autres à l'aide d'un système de bus.

5. Dispositif selon une des revendications précédentes, **caractérisé en ce que** le dispositif de commande (3) et l'au moins une sous-installation de commande (5, 5') sont disposés dans une seule et même unité de construction.

6. Dispositif selon la revendication 5, **caractérisé en ce que** l'unité de construction se présente sous forme d'un bâtiment.

7. Dispositif selon une des revendications 1 à 4, **caractérisé en ce que** l'au moins une sous-installation de commande (5, 5') est associée directement à un moyen d'établissement de conditions climatiques définies.

8. Dispositif selon une des revendications précédentes, **caractérisé en ce que** le moyen d'établissement de conditions climatiques définies est un appareil de chauffage à l'air de plafond (6), un chauffage ou un climatiseur.

9. Dispositif selon une des revendications précédentes, **caractérisé en ce que** la sous-installation de commande (5, 5') présente au moins une électronique de réglage qui est rattachée à des capteurs de mesure (17, 17') pour les paramètres de l'air ambiant à l'intérieur du bâtiment et qui est rattachée à des composantes des moyens d'établissement de conditions climatiques définies, ces composantes étant prévues pour régler les fonctions des moyens.

10. Dispositif selon la revendication 9, **caractérisé en ce que** les composantes sont un mélangeur (15), des moteurs de réglage (3), des pompes (14), des trappes (8) et des régulateurs de régime (20).

11. Dispositif selon une des revendications précédentes, **caractérisé en ce que** le dispositif de commande (3) et/ou l'au moins une sous-installation de commande (5, 5') est/sont équipé(s) d'un module d'interrogation à distance.

12. Dispositif selon une des revendications précédentes, **caractérisé en ce que** le dispositif de commande (3) présente au moins une entrée de consommation d'énergie.

13. Dispositif selon une des revendications précédentes, **caractérisé en ce qu'**au dispositif de commande (3) est associée au moins une interface avec un système de bus externe (23).

14. Dispositif selon une des revendications précédentes, **caractérisé en ce que** le dispositif de commande (3) est rattaché à au moins un ordinateur personnel (21).

15. Dispositif selon la revendication 14, **caractérisé en ce que** l'ordinateur personnel (21) assure l'interface avec le système de bus externe (23).
